# EUROPÄISCHE PATENTSCHRIFT

(11) **EP 2 108 784 B1**
(45) Veröffentlichungstag und Bekanntmachung des Hinweises auf die Patenterteilung: **09.03.2016**
(21) Anmeldenummer: 09003392.9
(22) Anmeldetag: 09.03.2009
(51) Int. Cl.: F01D 5/14, F01D 9/04, F01D 9/06, F02C 3/30

(54) **Strömungsmaschine mit Fluid-Injektorbaugruppe**
Flow machine with fluid injector component group
Turbomachine dotée d'un composant d'injecteur de fluide

(30) Priorität: 08.04.2008 DE 102008017844
(43) Veröffentlichungstag der Anmeldung: 14.10.2009
(73) Patentinhaber: Rolls-Royce Deutschland Ltd & Co KG, 15827 Blankenfelde-Mahlow (DE)
(72) Erfinder: Gümmer, Volker, Dr., 15831 Mahlow (DE)
(74) Vertreter: Hoefer & Partner Patentanwälte mbB

(56) Entgegenhaltungen:
- DE-A1-102004 030 597
- DE-T2- 69 219 898
- GB-A- 1 137 087

## Beschreibung

Die Erfindung bezieht sich auf eine Strömungsmaschine gemäß den Merkmalen des Oberbegriffs des Anspruchs 1.

Die vorliegende Erfindung bezieht sich auf Strömungsmaschinen wie Bläser, Verdichter, Pumpen und Turbinen, sowohl in axialer, halbaxialer als auch in radialer Bauart. Das Arbeitsmedium oder Fluid kann gasförmig oder flüssig sein.

Die Strömungsmaschine kann eine oder mehrere Stufen mit jeweils einem Rotor und einem Stator umfassen.

Der Rotor besteht aus einer Anzahl von Schaufeln, die mit der rotierenden Welle der Strömungsmaschine verbunden sind. Der Rotor ist mit freiem Schaufelende oder mit Deckband am Gehäuse ausgeführt. Der Stator besteht aus einer Anzahl feststehender Schaufeln, die gehäuseseitig mit festem Schaufelende ausgeführt sind.

Die Strömungsmaschine kann vor dem ersten Rotor eine besondere Form eines Stators, ein sogenanntes Vorleitrad aufweisen.

Es kann mindestens ein Stator oder Vorleitrad abweichend von der unbeweglichen Fixierung auch drehbar gelagert sein, um den Anströmwinkel zu verändern. Eine Verstellung erfolgt beispielsweise durch eine von außerhalb des Ringkanals zugängliche Spindel.

In besonderer Ausgestaltung kann die Strömungsmaschine mindestens eine Reihe verstellbarer Rotoren aufweisen.

Die aerodynamische Belastbarkeit und die Effizienz von Strömungsmaschinen, beispielsweise Bläsern, Verdichtern, Pumpen, Ventilatoren und Turbinen, wird insbesondere durch das Wachstum und die Ablösung von Grenzschichten nahe der Gehäusewand begrenzt.

Der Stand der Technik hält für dieses Problem nur bedingt Lösungen bereit. Es existieren Konzepte zur Fluidzufuhr an Turbinenschaufeln, die im Wesentlichen der Oberflächenkühlung und nicht der Grenzschichtenergetisierung dienen. Es existieren weiterhin für Verdichter-Rotoren Konzepte zur Luftzufuhr an Nabe und Gehäuse durch achsensymmetrisch angeordnete Schlitze, um die dortigen Wandgrenzschichten zu beeinflussen. Schließlich ist es bekannt, Rotoren in Gehäusenähe aus einzelnen als Störkörper im Gasstrom angeordneten Injektordüsen anzublasen, um die dortige Radialspaltströmung günstig zu beeinflussen.

Der allgemeine Gedanke der Grenzschichtbeeinflussung durch Einblasung bzw. Fluidzufuhr ist somit im Stand der Technik enthalten, doch sind die bekannten Lösungen nur bedingt effektiv und in ihrer praktischen Anwendbarkeit sehr begrenzt. Wichtig für die Realisierbarkeit und die Wirksamkeit einer Fluideinbringung in den Strömungspfad einer Strömungsmaschine ist die Form und die Platzierung der Injektordüse. Insbesondere im Hinblick auf eine leckagefreie Konzeption der zur Schaffung des Fluidstrahls verwendeten Bauteile mangelt es im Stand der Technik an praktikablen Lösungen.

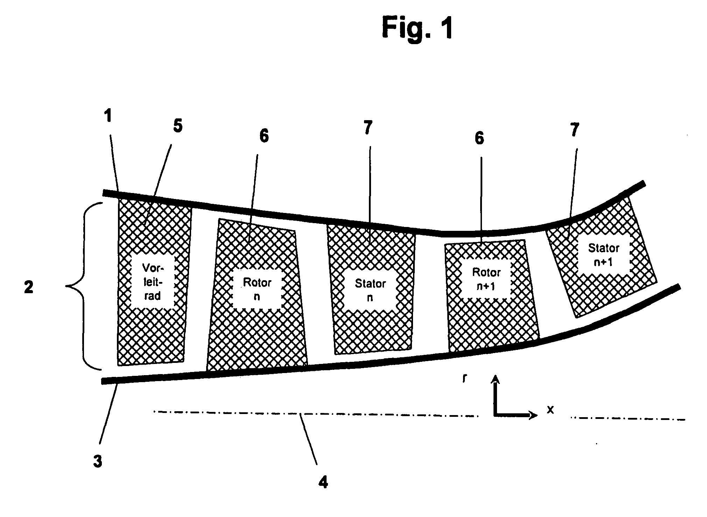

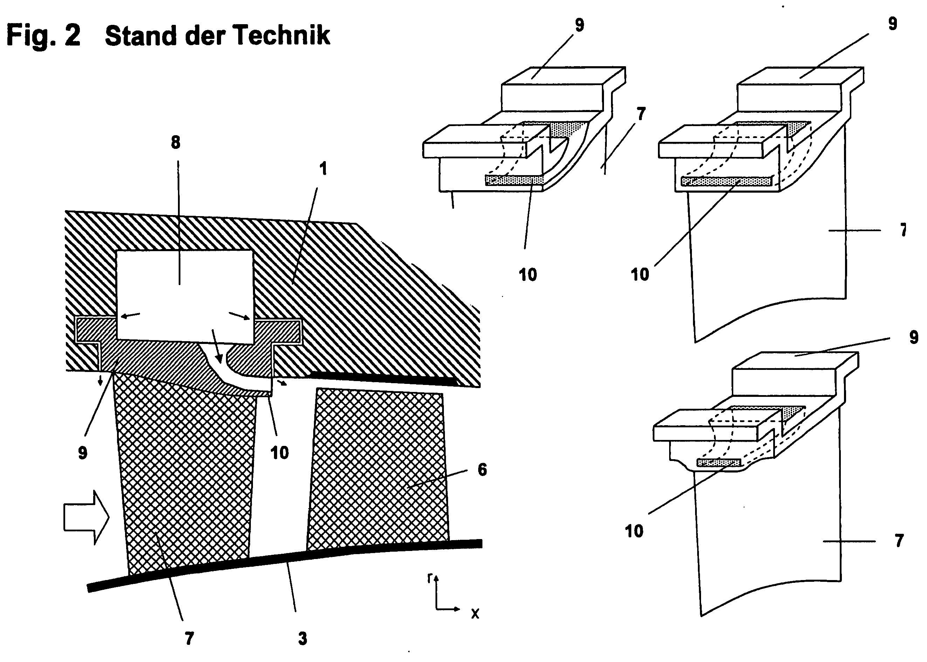

Die Fig.1 zeigt in schematischer Darstellung eine Strömungsmaschine in der Meridianansicht, hier das Beispiel eines Verdichters, bestehend aus einem Ringkanal 2, der innen durch eine Nabenkontur 3 und außen durch eine Gehäusekontur 1 begrenzt wird, und mit einer Anzahl von Rotorschaufelreihen 6 und Statorschaufelreihen 7 innerhalb des Ringkanals 2 ausgestattet ist. Zwischen den Schaufelreihen existieren beschaufelungsfreie Räume. Wie durch den großen Pfeil (in x-Richtung) dargestellt, wird die Strömungsmaschine von links anströmt. An jedem Ort der Ringkanalgrenzen (benetzte Naben- und Gehäuseoberflächen) ist die Einbringung von Fluid mittels eines oder mehrerer geeigneter Injektoren vorteilhaft. Eine erste Lösung dazu zeigt die DE 10 2004 030 597 A1. Dort werden spezielle, am Statorbauteil ausgeprägte Injektordüsen 10, siehe Fig.2, vorgeschlagen.

Die DE 692 19 898 T2 beschreibt eine Turbomaschine. Dabei sind fest in eine Gehäusewandung eingesetzte Düsen vorgesehen.

Aus der GB 1 137 087 A ist ein Radialverdichter bekannt, bei welchem in der Gehäusewandung Düseneinsätze vorgesehen sind.

Die DE 10 2004 030 597 A1 zeigt Düsen, die im Schaufelfuß ausgebildet sind.

Der Erfindung liegt die Aufgabe zugrunde, eine Strömungsarbeitsmaschine der eingangs genannten Art zu schaffen, welche die Nachteile des Standes der Technik vermeidet und eine optimierte Strömungsführung ermöglicht.

Erfindungsgemäß wird die Aufgabe durch die Merkmalskombination des Hauptanspruchs gelöst, die Unteransprüche zeigen weitere vorteilhafte Ausgestaltungen der Erfindung.

Im Einzelnen betrifft die Erfindung somit eine Fluid-Injektorbaugruppe für den Injektoreinsatz in Strömungsmaschinen, wobei ein Injektoreinsatz den Injektordüsenkanal als zentrales Bauteil für eine leckagefreie Einbringung des Fluids in den Hauptströmungspfad der Strömungsmaschine umfasst.

Die erfindungsgemäße Lösung zeichnet sich durch eine Reihe erheblicher Vorteile aus.

So ist insbesondere sichergestellt, dass keine unerwünschten Leckageströmungen auftreten, welche den Strömungsverlauf in dem Ringkanal oder Hauptströmungskanal sowie die Ausströmung aus den Injektordüsen stört. Werden für Injektordüsen Bauweisen nach dem Stand der Technik eingesetzt, d.h., Düsen direkt in einem Schaufelbauteil oder einem Gehäuse- bzw. Nabenbauteil vorgesehen, besteht aufgrund der üblicherweise losen Passung der Bauteile untereinander eine hohe Anzahl von kleinen Spalten und Lücken, durch die Fluid bei Umgehung der Injektordüse ungewollt entweicht. Dies führt zu merklichen und für das Leistungsverhalten der Strömungsmaschine nachteilhaften Leckageströmungen. Erfindungsgemäß ergibt sich demgegenüber eine ungehinderte, gezielt steuerbare Strömung im Randbereich.

Erfindungsgemäß ist somit für den Einsatz in Strömungsmaschinen eine Fluid-Injektorbaugruppe mit besonderer Anordnung geschaffen worden, die eine effiziente und leckagefreie Randstrahlerzeugung an den begrenzenden Wandungen des Hauptströmungspfades ermöglicht.

Im Folgenden wird die Erfindung anhand von Ausführungsbeispielen in Verbindung mit den Figuren beschrieben. Dabei zeigt:
- Fig. 1:: Skizze einer Strömungsmaschine, Beispiel Verdichter,
- Fig. 2:: Fluid-Injektorbaugruppe nach dem Stand der Technik,
- Fig. 3a:: Erfindungsgemäße Fluid-Injektorbaugruppe, Blick auf eine Naben- oder Gehäuseoberfläche des Hauptströmungspfades,
- Fig. 3b:: Erfindungsgemäß schräge Ausrichtung des Injektorstrahls bei Relativbewegung zwischen Injektor und Schaufelreihe,
- Fig. 4:: Erfindungsgemäße Fluid-Injektorbaugruppe, Schnitt Z-Z, Injektoreinsatz stromauf einer Schaufelreihe mit Radialspalt,
- Fig. 5:: Erfindungsgemäße Fluid-Injektorbaugruppe, Schnitt Z-Z, Injektoreinsatz im Laufbereich einer Schaufelreihe mit Radialspalt,
- Fig. 6:: Erfindungsgemäße Fluid-Injektorbaugruppe, Schnitt Z-Z, Injektoreinsatz im Bereich eines Schaufelfußes (festes Schaufelende),
- Fig. 7:: Erfindungsgemäße Fluid-Injektorbaugruppe, Injektoreinsatz im Bereich eines Schaufelfußes, Ansicht X-X,
- Fig. 8:: Erfindungsgemäße Fluid-Injektorbaugruppe, Schnitt Z-Z, Injektoreinsatz im Bereich eines Schaufelfußes (festes Schaufelende),
- Fig. 9:: Erfindungsgemäße Fluid-Injektorbaugruppe, Injektoreinsatz im Bereich eines Schaufelfußes, Ansicht X-X,
- Fig. 10:: Erfindungsgemäße Fluid-Injektorbaugruppe, Schnitt Z-Z, Injektoreinsatz stromab im Drehbereich einer Verstellschaufel,
- Fig. 11:: Erfindungsgemäße Fluid-Injektorbaugruppe, Injektoreinsatz stromab im Drehbereich einer Verstellschaufel, Ansicht X-X,
- Fig. 12:: Erfindungsgemäße Fluid-Injektorbaugruppe, Schnitt Z-Z, Injektoreinsatz stromauf im Drehbereich einer Verstellschaufel, und
- Fig. 13:: Erfindungsgemäße Fluid-Injektorbaugruppe, Injektoreinsatz stromauf im Drehbereich einer Verstellschaufel, Ansicht X-X.

Die Fig. 2 zeigt eine Fluid-Injektorbaugruppe nach dem Stand der Technik. Eine Fluidversorgungskammer grenzt direkt an Schaufel- und Gehäusebauteile an, die untereinander funktionsbedingt ein Spiel aufweisen, sodass Fluid durch dauerhaft oder in bestimmten Betriebszuständen bestehende Spalte und Lücken entweicht ohne die Injektordüse 10 passiert zu haben. Die Injektordüse 10 ist in dem hier gezeigten Beispiel für den Stand der Technik innerhalb eines Schaufelbauteils angeordnet.

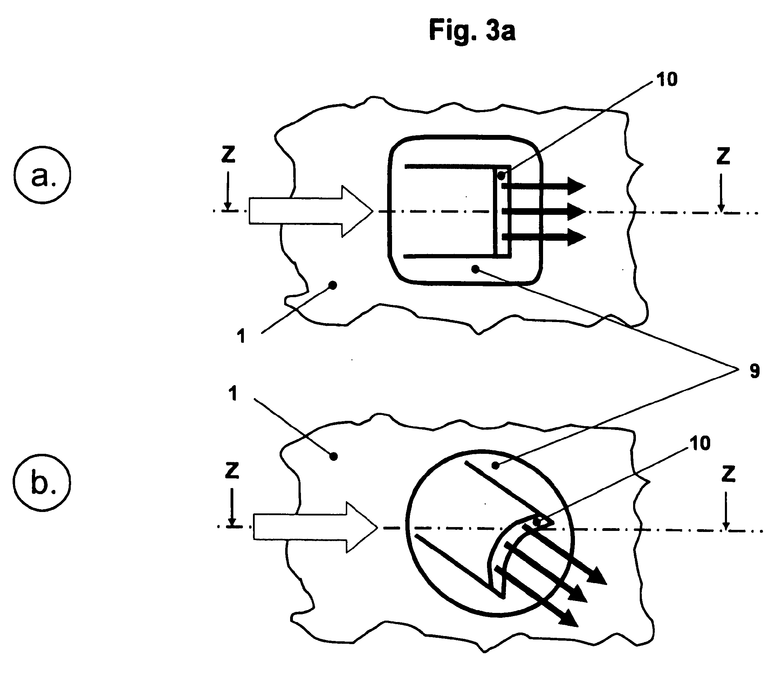

Die Fig. 3a zeigt die erfindungsgemäße Lösung einer Fluid-Injektorbaugruppe. Der Blick ist vom Innern des Hauptströmungspfades (Ringkanal der Strömungsmaschine) auf die Oberfläche einer der Hauptströmungspfadwandungen der Strömungsmaschine gerichtet. Die Fig. 3a enthält zwei Teilbilder, in denen jeweils die Meridianströmungsrichtung in der Strömungsmaschine mit einem dicken Pfeil gekennzeichnet ist. Die Oberfläche, die als ausgebrochene Zone in den zwei Teilbildern der Fig. 3a erkennbar ist, kann mindestens einem Nabenbauteil 3 (z. B. Rotortrommel oder Rotorplattform) oder mindestens einem Gehäusebauteil 1 (z. B. Gehäuseschale oder Statorplattform) zugehören. Als zentrales und besonders kennzeichnendes Bauteil der Fluid-Injektorbaugruppe ist ein Injektoreinsatz 9 vorgesehen, in dem die Injektordüse 10 beherbergt wird und der erfindungsgemäß von einer Fluidversorgungskammer 8 durch mindestens ein Naben- oder Gehäusebauteil bis an den Hauptströmungspfad reicht. Der Injektoreinsatz 9 ist dabei fest und leckagefrei mit mindestens einem die Fluidversorgungskammer bildenden Bauteil verbunden. Mit allen weiteren zur Baugruppe gehörenden Bauteilen kann der Injektoreinsatz 9 ein lose verbundenes, möglicherweise auch Spalte bildendes Arrangement aufweisen.

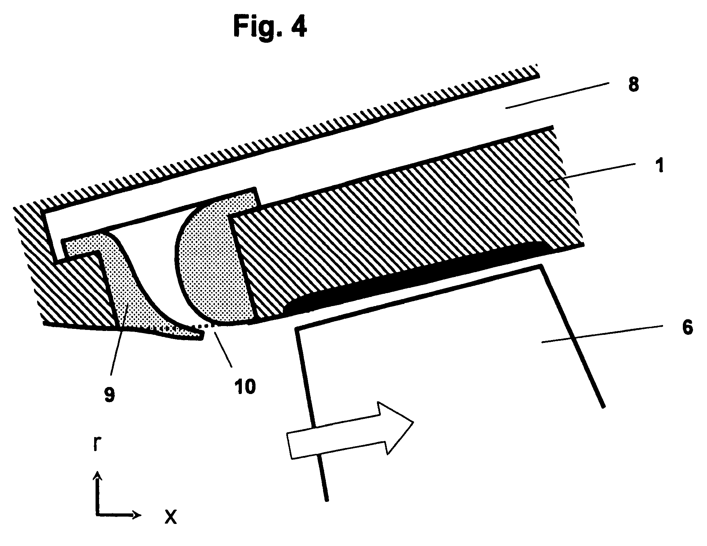

Die Stirnseite des Injektoreinsatzes 9 und der auf der Stirnseite angeordnete Düsenaustritt ist in den Teilbildern a.) und b.) erkennbar. Der austretende Injektorstrahl ist mit kleinen Pfeilen angedeutet. Erfindungsgemäss kann der Injektorstrahl in Meridianströmungsrichtung weisen oder aber bei besonders günstiger Gestaltung unter einem Winkel schräg zur Meridianströmungsrichtung weisen. Weitere Merkmale der Anordnung zeigt der hier markierte Meridianschnitt Z-Z durch die Fluid-Injektorbaugruppe, siehe Figuren 4, 5, 6, 8, 10 und 12.

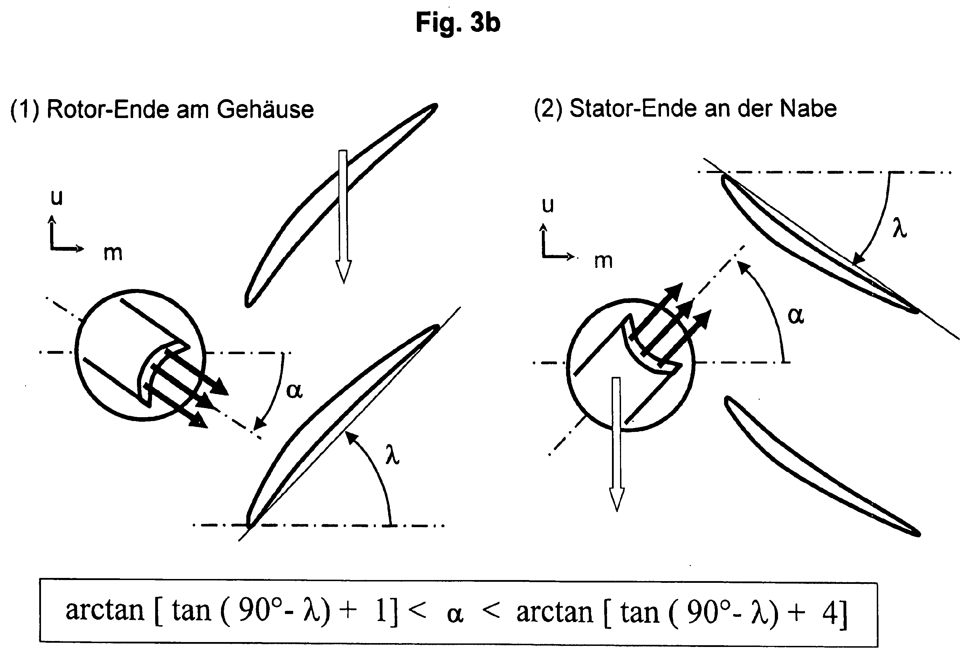

Die Fig. 3b zeigt in der durch die Meridianströmungsrichtung m und die Umfangsrichtung u aufgespannten Ebene beispielhaft zwei erfindungsgemäße Injektorbaugruppen aus einer Anordnung von Injektor und einer von ihr beaufschlagten Schaufelreihe, wobei zwischen Injektor und Schaufelreihe eine Relativbewegung vorliegt. Anordnung (1) zeigt einen Injektor im Bereich einer Rotorschaufelreihe am Gehäuse. Die Rotorschaufellausrichtung ist durch einen dicken Pfeil markiert. Erfindungsgemäß weist die Ausrichtung des Injektors eine Komponente in Laufrichtung des Rotors, das heißt einen positiven Ausrichtungsneigungswinkel alpha auf. Der Neigungswinkel alpha besitzt, wie im linken Teil der Fig. 3b eingezeichnet, ein positives Vorzeichen.

Die Anordnung (2) zeigt einen Injektor im Bereich eines Stators an der Nabe. Erfindungsgemäß weist die Ausrichtung des Injektors eine Komponente entgegen der eigenen Laufrichtung auf. Der Neigungswinkel alpha ist auch hier erfindungsgemäß so, wie im rechten Teil der Fig. 3b eingezeichnet, positiv vorzusehen.

Erfindungsgemäß besonders günstig ist es, wenn für den Winkel alpha Werte im wie folgt definierten Bereich vorgesehen sind: arctan[tan(90°-lambda)+1] < alpha < arctan[tan(90°-lambda)+4]. Lambda ist dabei der Staffelungswinkel der Schaufeln am Schaufelende des betreffenden Rotors oder Stators.

Die Fig. 4 zeigt eine erfindungsgemäße Fluid-Injektorbaugruppe in der durch die Axialrichtung x und die Radialrichtung r aufgespannten Meridianebene der Strömungsmaschine. Die Hauptströmung der Maschine verläuft, wie durch einen dicken Pfeil angedeutet, etwa von links nach rechts. Der erfindungsgemäße mit der Fluidversorgungskammer fest und leckagefrei verbundene Fluid-Injektoreinsatz 9 ist hier in einer Weise vorgesehen, dass er zum Hauptströmungspfad hinweisend in die Wandung der Fluidversorgungskammer eingesetzt wird. Der Fluid-Injektoreinsatz 9 und die Fluid-Injektorkammer können erfindungsgemäß mit Hilfe einer Verschraubung, einer Verschweißung, eines Presssitzes oder einer anderen fest und leckagefrei schließenden Verbindung verbunden sein.

Der erfindungsgemäße Fluid-Injektoreinsatz 9 ist hier stromauf der Vorderkante eines freien Schaufelendes einer Rotor- oder Statorschaufelreihe mit Radialspalt vorgesehen.

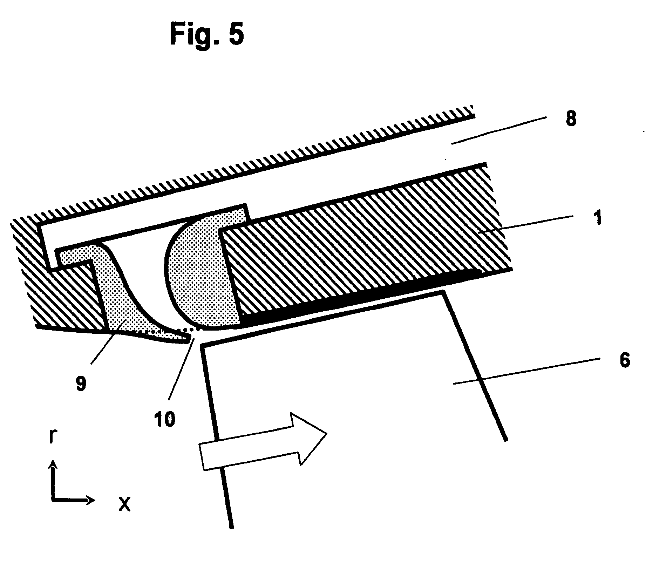

Die Fig.5 zeigt ebenfalls eine erfindungsgemäße Fluid-Injektorbaugruppe in der durch die Axialrichtung x und die Radialrichtung r aufgespannten Meridianebene der Strömungsmaschine. Der erfindungsgemäße Fluid-Injektoreinsatz 9 ist hier zum Teil im Radialspaltbereich eines freien Schaufelendes einer Rotor- oder Statorschaufelreihe mit Radialspalt vorgesehen. Erfindungsgemäß kann sich der Fluid-Injektoreinsatz 9 aber auch gänzlich im Bereich des Radialspaltes befinden und diesen mit formen.

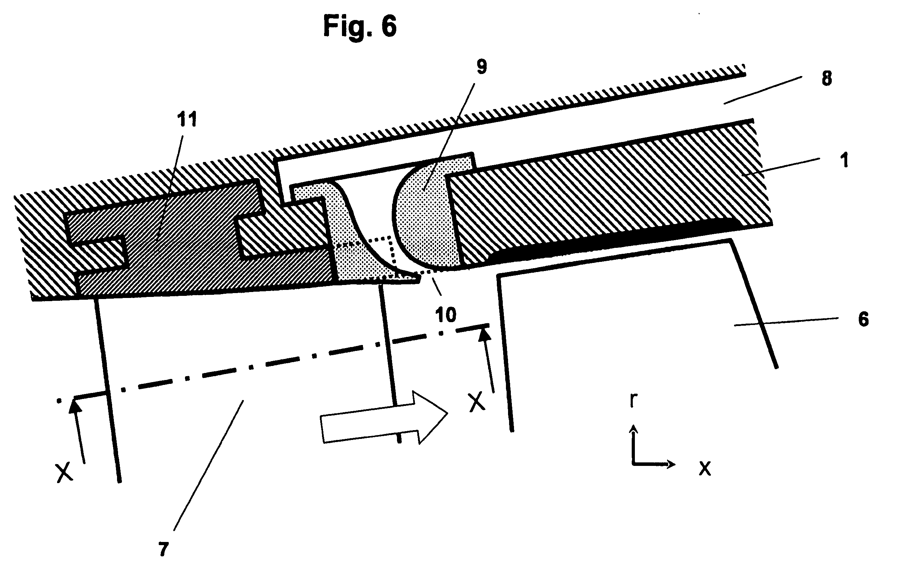

In Fig.6 ist der Fluid-Injektoreinsatz 9 erfindungsgemäß im Bereich eines Schaufelfußes 11 einer Rotor- 6 oder Statorschaufelreihe 7 vorgesehen (festes Schaufelende), derart, dass der Fluid-Injektoreinsatz 9 im Eingriff mit dem beschaufelten Raum steht und auf diese Weise die Schaufelhinterkanten - und im Fall des Vorhandenseins von Schaufelplattformen auch die Plattformhinterkanten - stromab begrenzender Kanten des Fluid-Injektoreinsatzes 9 angeordnet sind. Die hier gewählte Darstellung zeigt eine Schaufelreihe mit Plattform und Fuß, jedoch ist eine entsprechende Anordnung des Fluid-Injektoreinsatzes 9 ebenfalls erfindungsgemäß, wenn die Schaufeln und die den Hauptströmungpfadrand bildende Kontur einem integralen gemeinsamen Bauteil zugehören.

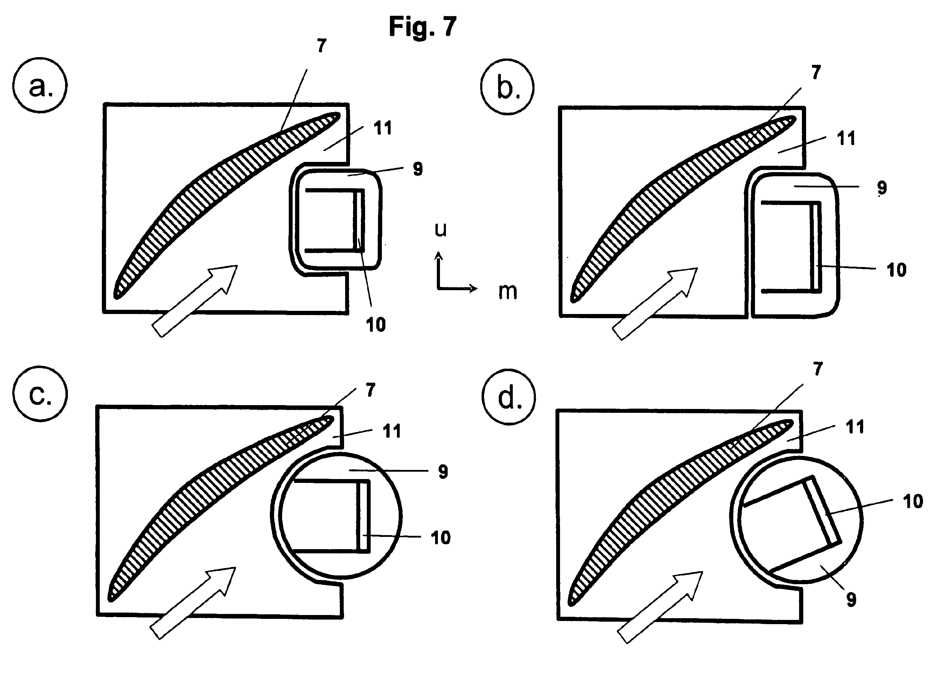

Weitere Merkmale der erfindungsgemäßen Lösung lassen sich anhand des Schnittes X-X beschreiben, siehe Fig.7.

Die Fig.7 zeigt die erfindungsgemäße Anordnung im Schnitt X-X für vier beispielhafte Fälle. Alle Teilbilder der Fig.7 stellen eine Schaufelplattform dar, auf der ein Schaufelprofil vorgesehen ist. In den vier Teilbildern sind unterschiedliche Möglichkeiten des Eingriffes des Fluid-Injektoreinsatzes 9 in den beschaufelten Raum und in die Schaufelplattform 11 dargestellt. Teilbild a.) zeigt einen etwa mittig in die Plattform eingreifenden und im wesentlichen in Meridianrichtung m ausgerichteten Fluid-Injektoreinsatz 9. Teilbild b.) zeigt einen schaufeldruckseitig zur Plattformseite hin orientierten Eingriff des Fluid-Injektoreinsatzes 9 bei einer im Wesentlichen in Meridianrichtung m weisenden Ausrichtung. Teilbild c.) zeigt einen etwa mittig in die Plattform eingreifenden und im wesentlichen in Meridianrichtung m ausgerichteten runden Fluid-Injektoreinsatz 9. Teilbild d.) zeigt einen etwa mittig in die Plattform eingreifenden und unter einem Winkel zur Meridianrichtung m ausgerichteten runden Fluid-Injektoreinsatz 9. Die Form der Schaufelplattform 11 ist hier rechtwinklig dargestellt, doch können auch Plattformen mit Parallelogrammform Bestandteil einer erfindungsgemäßen Lösung sein, dahingehend, dass gegebenenfalls der Fluid-Injektoreinsatz 9 im Eingriff mit zwei benachbarten Schaufelplattformen beziehungsweise zwei benachbarten Schaufelfüßen steht.

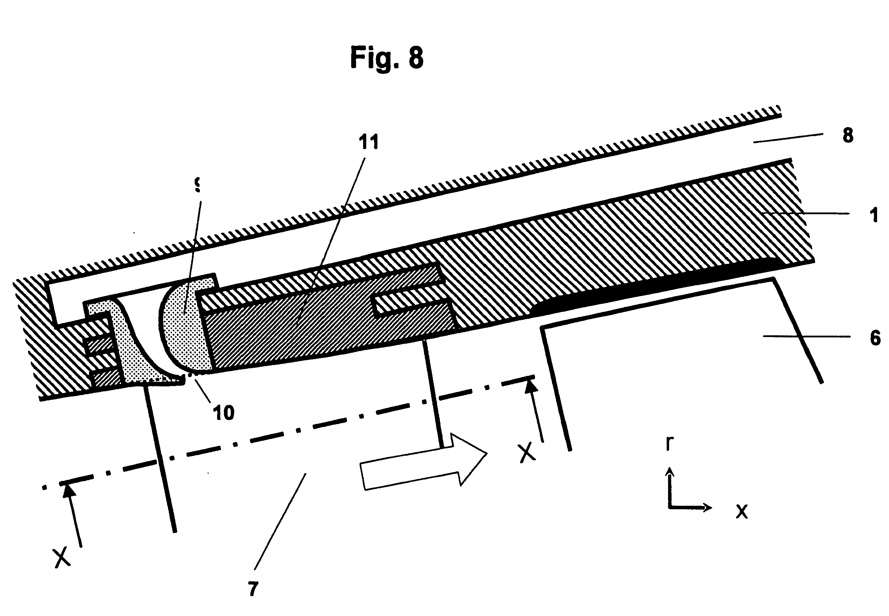

In Fig. 8 ist der Fluid-Injektoreinsatz 9 erfindungsgemäß im Bereich eines Schaufelfußes 11 einer Rotor- 6 oder Statorschaufelreihe 7 vorgesehen (festes Schaufelende), darart, dass der Fluid-Injektoreinsatz 9 im Eingriff mit dem beschaufelten Raum steht und auf diese Weise die Schaufelvorderkanten - und im Fall des Vorhandenseins von Schaufelplattformen auch die Plattformhinterkanten - stromauf begrenzender Kanten des Fluid-Injektoreinsatzes 9 angeordnet sind. Die hier gewählte Darstellung zeigt eine Schaufelreihe mit Plattform und Fuß, jedoch ist eine entsprechende Anordnung des Fluid-Injektoreinsatzes 9 ebenfalls erfindungsgemäß, wenn die Schaufeln und die den Hauptströmungpfadrand bildende Kontur einem integralen gemeinsamen Bauteil zugehören.

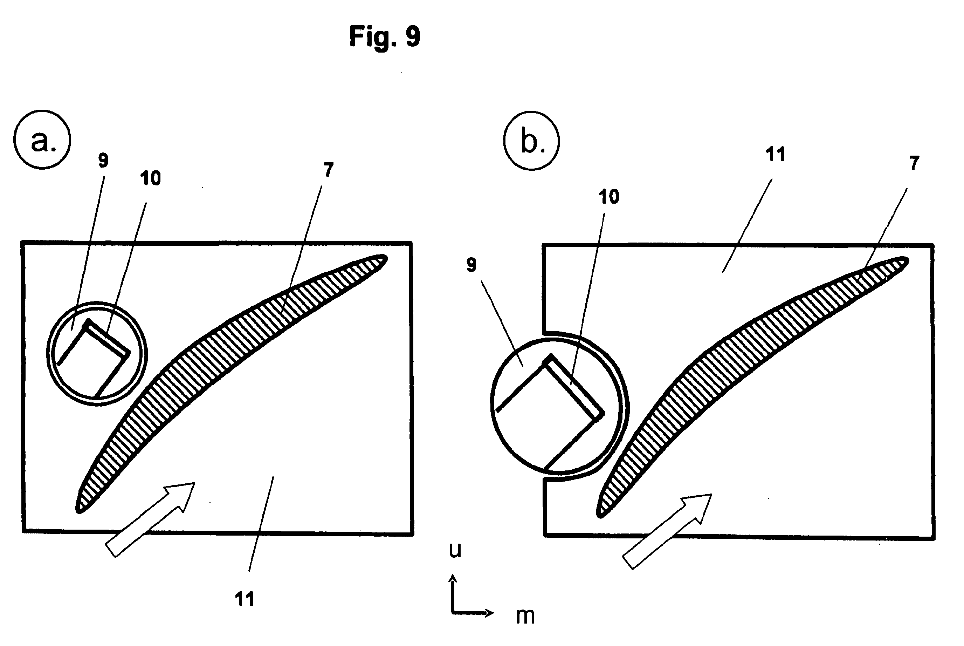

Weitere Merkmale der erfindungsgemäßen Lösung lassen sich anhand des Schnittes X-X beschreiben, siehe Fig.9.

Die Fig. 9 zeigt die erfindungsgemäße Anordnung im Schnitt X-X für zwei beispielhafte Fälle. Beide Teilbilder der Fig.9 stellen eine Schaufelplattform 11 dar, auf der ein Schaufelprofil vorgesehen ist. In den zwei Teilbildern sind unterschiedliche Möglichkeiten des Eingriffes des Fluid-Injektoreinsatzes 9 in den beschaufelten Raum und in die Schaufelplattform 11 dargestellt. Teilbild a.) zeigt einen teilweise im beschaufelten Raum und gänzlich in der Schaufelplattform 11 vorgesehenen unter einem Winkel zur Meridianrichtung m ausgerichteten runden Fluid-Injektoreinsatz 9, vorzugsweise in der Nähe der Schaufelsaugseite. Besonders vorteilhaft ist eine Anordnung des Fluid-Injektoreinsatzes 9 in der Nähe einer Schaufelsaugseite und stromauf einer Grenze 40% der meridionalen Ersteckung des Schaufelprofils am betrachteten Strömungspfadrand stromab der Schaufelvorderkanten. Teilbild b.) zeigt einen teilweise im beschaufelten Raum und teilweise in der Schaufelplattform 11 vorgesehenen unter einem Winkel zur Meridianrichtung m ausgerichteten runden Fluid-Injektoreinsatz 9, vorzugsweise in der Nähe der Schaufelsaugseite. Die Form der Schaufelplattform 11 ist hier rechtwinklig dargestellt, doch können auch Plattformen mit Parallelogrammform Bestandteil einer erfindungsgemäßen Lösung sein, dahingehend, dass gegebenenfalls der Fluid-Injektoreinsatz 9 im Eingriff mit zwei benachbarten Schaufelplattformen beziehungsweise zwei benachbarten Schaufelfüßen steht.

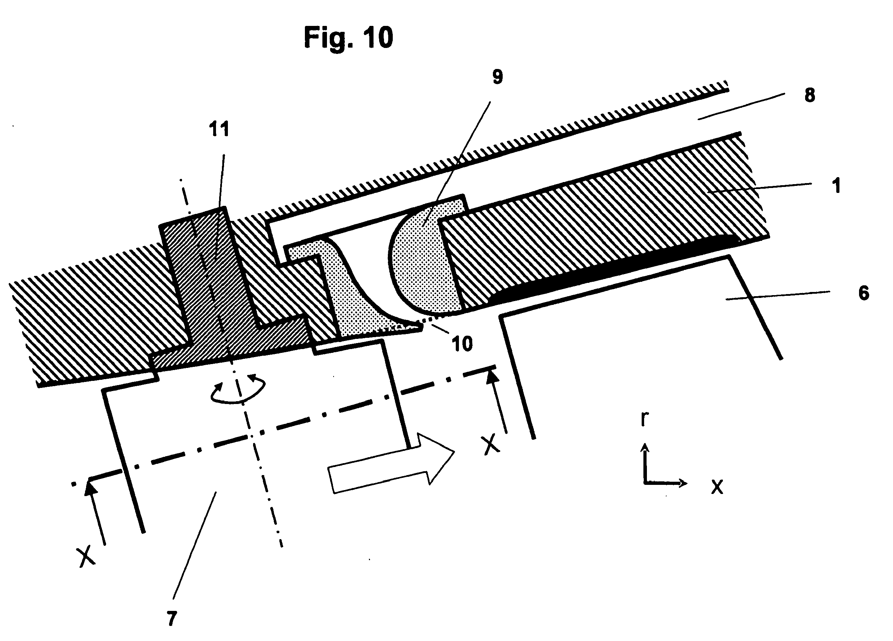

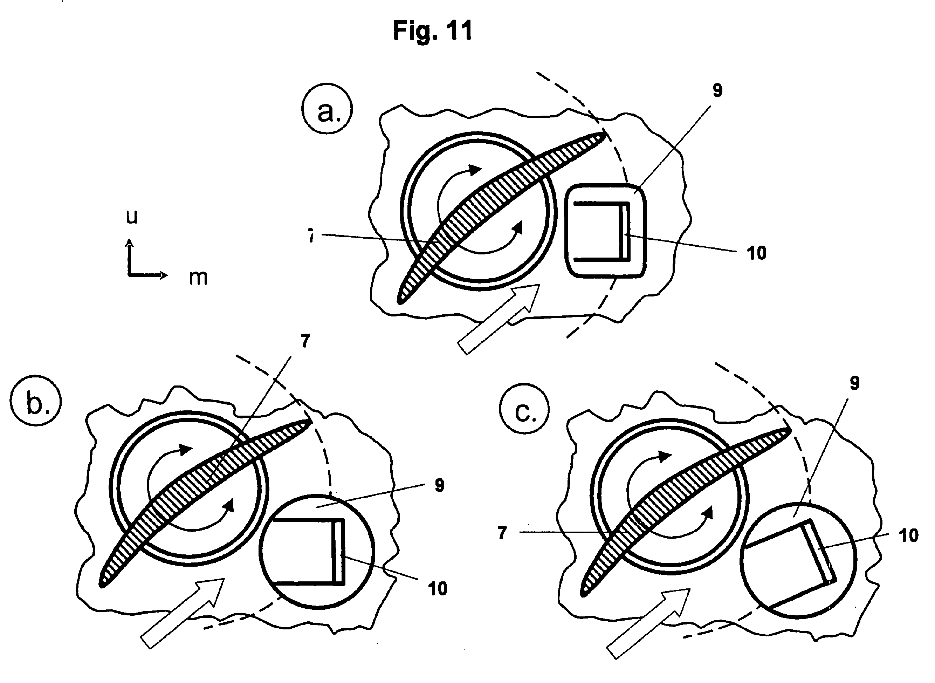

In Fig. 10 ist der Fluid-Injektoreinsatz 9 erfindungsgemäß im Bereich eines Schaufelendes einer Rotor- oder Statorschaufelreihe vorgesehen, deren Schaufeln um eine Achse drehbar sind (Verstellschaufeln), derart, dass der Fluid-Injektoreinsatz 9 bezogen auf die Meridianrichtung im Eingriff mit dem beschaufelten Raum steht und auf diese Weise die Schaufelhinterkanten stromab begrenzender Kanten des Fluid-Injektoreinsatzes 9 angeordnet sind. Die hier gewählte Darstellung zeigt eine verstellbare Schaufelreihe stromauf einer Schaufelreihe mit Radialspalt. Wie hier angedeutet ist, kann sich die Hinterkante der Verstellschaufel bei Drehung um die Verstellachse erfindungsgemäß über mindestens Teile des Fluid-Injektoreinsatzes 9 hinweg bewegen. Weitere Merkmale der erfindungsgemäßen Lösung lassen sich anhand des Schnittes X-X beschreiben, siehe Fig.11.

Die Fig.11 zeigt die erfindungsgemäße Anordnung im Schnitt X-X für drei beispielhafte Fälle. Alle drei Teilbilder der Fig.11 stellen einen ausbruchartig gezeichneten Bereich einer Hauptströmungspfadwandung dar, in der eine Verstellschaufel gelagert ist. Die Hinterkante der Verstellschaufel bewegt sich bei Drehung der Schaufel entlang des gestrichelt eingezeichneten Hinterkantendrehkreises. Erfindungsgemäß ist mindestens ein Fluid-Injektoreinsatz 9 innerhalb des Hinterkantendrehkreises vorgesehen. In den drei Teilbildern sind unterschiedliche erfindungsgemäße Konfigurationen des meridionalen Eingriffes des Fluid-Injektoreinsatzes 9 in den beschaufelten Raum dargestellt. Das Teilbild a.) zeigt einen in Meridianströmungsrichtung orientierten Fluid-Injektoreinsatz 9 mit im Wesentlichen rechtwinkliger Stirnseite. Das Teilbild b.) zeigt einen in Meridianströmungsrichtung orientierten Fluid-Injektoreinsatz 9 mit im Wesentlichen kreisförmiger Stirnseite. Das Teilbild b.) zeigt einen schräg zur Meridianrichtung orientierten Fluid-Injektoreinsatz 9 mit kreisförmiger Stirnseite.

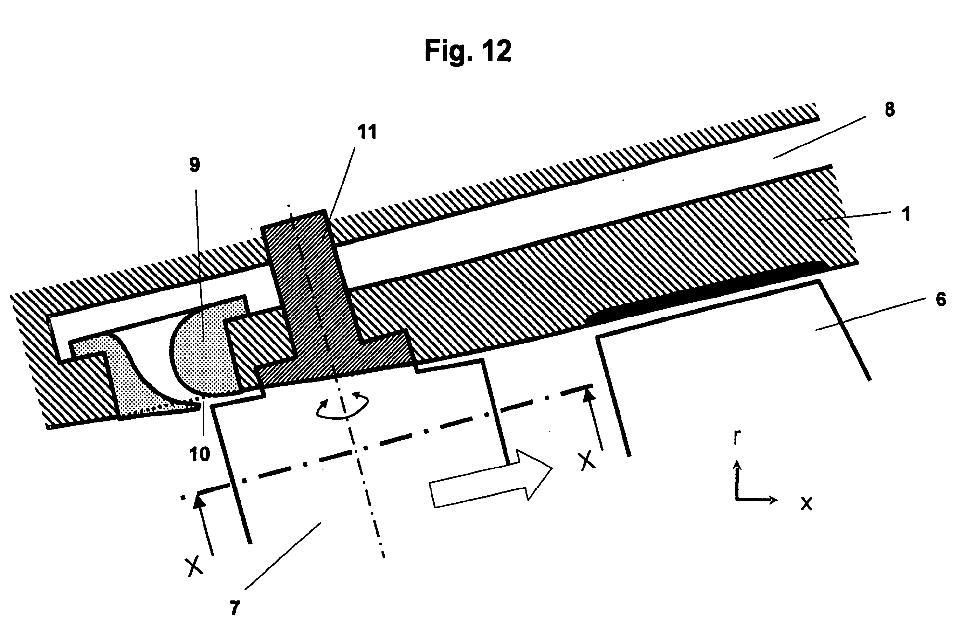

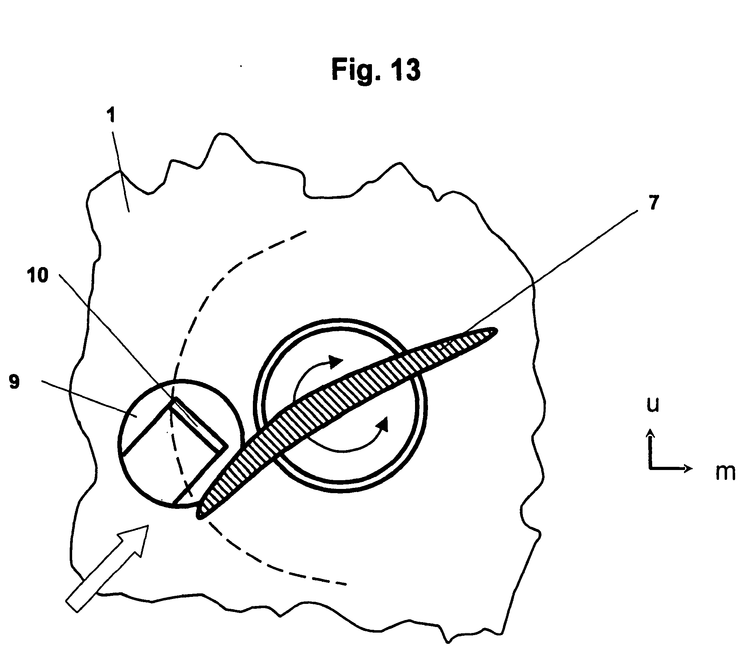

In Fig. 12 ist der Fluid-Injektoreinsatz 9 ebenfalls erfindungsgemäß im Bereich eines Schaufelendes einer verstellbaren Rotor- oder Statorschaufelreihe, derart, dass der Fluid-Injektoreinsatz 9 bezogen auf die Meridianrichtung im Eingriff mit dem beschaufelten Raum steht und auf diese Weise die Schaufelvorderkanten stromauf begrenzender Kanten des Fluid-Injektoreinsatzes 9 angeordnet sind. Die hier gewählte Darstellung zeigt eine verstellbare Schaufelreihe stromauf einer Schaufelreihe mit Radialspalt. Wie hier angedeutet ist, kann sich die Vorderkante der Verstellschaufel bei Drehung um die Verstellachse erfindungsgemäß über mindestens Teile des Fluid-Injektoreinsatzes 9 hinweg bewegen. Weitere Merkmale der erfindungsgemäßen Lösung lassen sich anhand des Schnittes X-X beschreiben, siehe Fig. 13.

Die Fig.13 zeigt die erfindungsgemäße Anordnung im Schnitt X-X Die Vorderkante der Verstellschaufel bewegt sich bei Drehung der Schaufel entlang des gestrichelt eingezeichneten Vorderkantendrehkreises. Erfindungsgemäß ist mindestens ein Fluid-Injektoreinsatz 9 innerhalb des Vorderkantendrehkreises vorgesehen und besitzt meridionalen Eingriffes mit dem beschaufelten Raum.

Die erfindungsgemäße Strömungsmaschine ist bevorzugt so ausgebildet, dass die Strömungsmaschine mit mindestens einer Fluid-Injektorbaugruppe im Randbereich des beschaufelten Hauptströmungspfades zur Schaffung eines im Wesentlichen tangential entlang einer Hauptströmungspfadwandung gerichteten Strahls, wobei:
- die den Hauptströmungspfad der Strömungsmaschine begrenzenden Naben- und Gehäusebauteile mindestens eine Fluidversorgungskammer beherbergen,
- mindestens in einem der Naben- und Gehäusebauteile mindestens ein Durchbruch vorgesehen ist, der durchgehend von einer Fluidversorgungskammer bis an den Hauptströmungspfad reicht und einen für die Injektion von Fluid geeigneten Einsatz aufnimmt,
- mindestens ein besagter Fluid-Injektoreinsatz fest durch Verschraubung, Verschweißung, Presspassung oder Fügung mit einem direkt an die Fluidversorgungskammer grenzenden Bauteil verbunden ist, sodass Fluid leckagefrei aus der Fluidversorgungskammer ausströmen und in den Injektoreinsatz einströmen kann,
- mindestens ein besagter Fluid-Injektoreinsatz sich durch mindestens eine Wandung eines der Naben- und Gehäusebauteile bis an den Hauptströmungspfad erstreckt, wobei insbesondere:
- mindestens ein besagter Fluid-Injektoreinsatz stromauf des Radialspalts einer mit freien Schaufelenden versehenen Schaufelreihe, Rotor- oder Statorreihe, angeordnet ist,
- mindestens ein besagter Fluid-Injektoreinsatz mindestens teilweise im Bereich des Radialspaltes einer mit freien Schaufelenden versehenen Schaufelreihe, Rotor- oder Statorreihe, vorgesehen ist und besagter Fluid-Injektoreinsatz den Radialspalt wenigstens teilweise mit begrenzt,
- mindestens ein besagter Fluid-Injektoreinsatz im Bereich eines festen Schaufelendes mindestens teilweise innerhalb des beschaufelten Bereiches dieser Schaufelreihe, Rotor- oder Statorreihe, vorgesehen ist,
- mindestens ein besagter Fluid-Injektoreinsatz mindestens ein Schaufelbauteil durchdringt,
- mindestens ein besagter Fluid-Injektoreinsatz im Bereich der Schaufelhinterkante wenigstens teilweise im Eingriff mit mindestens einer Schaufelplattform und/oder mindestens einem Schaufelfuß angeordnet ist,
- mindestens ein besagter Fluid-Injektoreinsatz innerhalb der Schaufelpassage zwischen zwei benachbarten Schaufeln angeordnet ist,
- mindestens ein besagter Fluid-Injektoreinsatz im Bereich der Schaufelvorderkante wenigstens teilweise im Eingriff mit mindestens einer Schaufelplattform und/oder mit mindestens einem Schaufelfuß angeordnet ist,
- mindestens ein besagter Fluid-Injektoreinsatz im Bereich eines Schaufelendes einer durch Verdrehung verstellbaren Schaufel, Rotor oder Stator, vorgesehen ist,
- mindestens ein besagter Fluid-Injektoreinsatz mindestens teilweise innerhalb des Bereiches zwischen den in Meridianströmungsrichtung stromauf und stromab durch die Verstellkreise der Schaufelvorder- und Schaufelhinterkante festgelegten Extrempositionen vorgesehen ist,
- mindestens ein besagter Fluid-Injektoreinsatz mindestens teilweise stromab des Verstellkreises der Schaufelvorderkante vorgesehen ist,
- mindestens ein besagter Fluid-Injektoreinsatz mindestens teilweise stromauf des Verstellkreises der Schaufelhinterkante vorgesehen ist,
- mindestens ein besagter Fluid-Injektoreinsatz in der Nähe einer Schaufelsaugseite vorgesehen ist, und/oder
- mindestens ein besagter Fluid-Injektoreinsatz stromauf einer Grenze vorgesehen ist, die um 40% der meridionalen Ersteckung des Schaufelprofils am betrachteten Strömungspfadrand stromab der Schaufelvorderkanten angeordnet ist.

Bei der erfindungsgemäßen Strömungsmaschine wird somit ein hohes Maß an raumsparender Randströmungsbeeinflussung erzielt, die eine bedeutende Reduzierung des Bau- und Kostenaufwandes ermöglicht. Je nach Ausnutzungsgrad des Konzeptes sind Verbesserungen des Wirkungsgrades bis zu 1 % möglich.

### Bezugszeichenliste

- 1: Gehäuse/Gehäusekontur
- 2: Ringkanal/Strömungskanal
- 3: Rotortrommel/Nabe/Nabenkontur
- 4: Maschinenachse
- 5: Vorleitrad
- 6: Rotor/Rotorschaufel/Rotorschaufelreihe
- 7: Stator/Statorschaufel/Statorschaufelreihe
- 8: Fluidversorgungskammer
- 9: Injektoreinsatz
- 10: Injektordüse
- 11: Schaufelfuß/Schaufelplattform

## Patentansprüche

1. Strömungsmaschine mit einem von einer Nabe und einer Gehäusewandung (1) begrenzten Strömungskanal (2), wobei im Bereich der Gehäusewandung eine Fluidversorgungskammer (8) ausgebildet ist, welche in Strömungsverbindung mit einem Injektoreinsatz (9) ist, der zur Zuleitung von Fluid aus der Fluidversorgungskammer (8) in den Strömungskanal (2) mit einer Injektordüse (10) versehen ist, wobei der Injektoreinsatz (9) dicht mit einer Wandung der Fluidversorgungskammer (8) verbunden ist, **dadurch gekennzeichnet, dass** der Injektoreinsatz (9) zumindest teilweise innerhalb eines beschaufelten Bereichs einer Schaufelreihe (6, 7) mit festen bzw. verstellbaren Schaufeln angeordnet ist und mindestens ein Schaufelbauteil einer festen Schaufel durchdringt, bzw. zumindest teilweise innerhalb des Drehkreises einer der Vorder- und Hinterkanten einer verstellbaren Schaufel angeordnet ist, dass der Injektoreinsatz (9) stromauf eines Radialspalts einer mit freien Schaufelenden versehenen Schaufelreihe (6, 7) angeordnet ist und dass zwischen dem Injektoreinsatz und der betreffenden Schaufelreihe eine Umfangsrelativbewegung vorgesehen ist und die Injektorstrahlrichtung eine Vektorkomponente in der vom Injektor aus betrachteten Fortschrittsrichtung aufweist, derart dass die Injektorstrahlrichtung mit der Meridianströmungsrichtung einen positiven Winkel alpha einschließt, wobei für den Winkel alpha Werte im wie folgt definierten Bereich vorgesehen sind: arctan[tan(90°-lambda)+1] < Winkel alpha < arctan[tan(90°-lambda)+4], wobei lambda der Staffelungswinkel der Schaufeln am betreffenden Schaufelende ist.

2. Strömungsmaschine nach Anspruch 1, **dadurch gekennzeichnet, dass** der Injektoreinsatz (9) leckagefrei mit der Wandung der Fluidversorungskammer (8) verbunden ist.

3. Strömungsmaschine nach Anspruch 1 oder 2, **dadurch gekennzeichnet, dass** der Injektoreinsatz (9) mit der Wandung der Fluidversorgungskammer (8) verschraubt ist.

4. Strömungsmaschine nach Anspruch 1 oder 2, **dadurch gekennzeichnet, dass** der Injektoreinsatz (9) mit der Wandung der Fluidversorgungskammer (8) verschweißt ist.

5. Strömungsmaschine nach Anspruch 1 oder 2, **dadurch gekennzeichnet, dass** der Injektoreinsatz (9) mit der Wandung der Fluidversorungskammer (8) mittels einer Presspassung verbunden ist.

6. Strömungsmaschine nach Anspruch 1 oder 2, **dadurch gekennzeichnet, dass** der Injektoreinsatz (9) mit der Wandung der Fluidversorgungskammer (8) mittels einer Fügeverbindung verbunden ist.

7. Strömungsmaschine nach einem der Ansprüche 1 bis 6, **dadurch gekennzeichnet, dass** der Injektoreinsatz (9) den Radialspalt zumindest teilweise begrenzt.

8. Strömungsmaschine nach einem der Ansprüche 1 bis 7, **dadurch gekennzeichnet, dass** der Injektoreinsatz (9) im Bereich einer Schaufelhinterkante zumindest teilweise im Eingriff mit mindestens einer Schaufelplattform (11) und/oder mindestens einem Schaufelfuß (11) angeordnet ist.

9. Strömungsmaschine nach einem der Ansprüche 1 bis 8, **dadurch gekennzeichnet, dass** der Injektoreinsatz (9) im Bereich einer Schaufelvorderkante zumindest teilweise im Eingriff mit mindestens einer Schaufelplattform (11) und/oder mindestens einem Schaufelfuss (11) angeordnet ist.

10. Strömungsmaschine nach einem der Ansprüche 1 bis 9, **dadurch gekennzeichnet, dass** der Injektoreinsatz (9) innerhalb einer Schaufelpassage zwischen zwei benachbarten Schaufeln angeordnet ist.

## Claims

1. Fluid-flow machine with a flow duct (2) confined by a hub and a casing wall (1), with a fluid supply chamber (8) being arranged in the area of the casing wall, which is in flow connection with an injector insert (9), which is provided with an injector nozzle (10) for the supply of fluid from the fluid supply chamber (8) into the flow duct (2), with the injector insert (9) being tightly connected to a wall of the fluid supply chamber (8), **characterized in that** the injector insert (9) is at least partly arranged within a bladed area of a blade row (6, 7) with fixed and/ or variable blades and passes through at least one blade component of a fixed blade and/ or is at least partly arranged within the rotating circle of one of the leading and trailing edges of a variable blade, that the injector insert (9) is arranged upstream of a radial gap of a blade row (6, 7) provided with free blade ends, and that a circumferential relative movement is provided between the injector insert and the respective blade row and that the injector jet orientation has a vector component in the direction of advance, as viewed from the injector, such that the injector jet orientation includes a positive angle alpha with the meridional flow direction, where for the angle alpha values are provided in the range defined as follows: arctan [tan (90° - lambda) +1] < angle alpha < arctan [tan (90° - lambda) +4], with lambda being the stagger angle of the blades at the respective blade end.

2. Fluid-flow machine in accordance with Claim 1, **characterized in that** the injector insert (9) is connected to the wall of the fluid supply chamber (8) in a leakage-free manner.

3. Fluid-flow machine in accordance with Claim 1 or 2, **characterized in that** the injector insert (9) is threadingly connected to the wall of the fluid supply chamber (8).

4. Fluid-flow machine in accordance with Claim 1 or 2, **characterized in that** the injector insert (9) is connected to the wall of the fluid supply chamber (8) by welding.

5. Fluid-flow machine in accordance with Claim 1 or 2, **characterized in that** the injector insert (9) is connected to the wall of the fluid supply chamber (8) by an interference fit.

6. Fluid-flow machine in accordance with Claim 1 or 2, **characterized in that** the injector insert (9) is connected to the wall of the fluid supply chamber (8) by joining.

7. Fluid-flow machine in accordance with one of the Claims 1 to 6, **characterized in that** the injector insert (9) at least partly confines the radial gap.

8. Fluid-flow machine in accordance with one of the Claims 1 to 7, **characterized in that** the injector insert (9), in the area of a blade trailing edge, is at least partly in engagement with at least one blade platform (11) and/ or at least one blade root (11).

9. Fluid-flow machine in accordance with one of the Claims 1 to 8, **characterized in that** the injector insert (9), in the area of a blade leading edge, is at least partly in engagement with at least one blade platform (11) and/ or at least one blade root (11).

10. Fluid-flow machine in accordance with one of the Claims 1 to 9, **characterized in that** the injector insert (9) is arranged within a blade passage between two adjacent blades.

## Revendications

1. Machine à écoulement comprenant un canal d'écoulement (2) délimité par un moyeu et une paroi de carter (1), sachant que dans la zone de la paroi de carter est formée une chambre d'alimentation en fluide (8) qui est en liaison fluidique avec un insert d'injection (9) muni d'une buse d'injection (10) pour acheminer du fluide dans le canal d'écoulement (2) à partir de la chambre d'alimentation en fluide (8), l'insert d'injection (9) étant relié de manière étanche à une paroi de la chambre d'alimentation en fluide (8), **caractérisée en ce que** l'insert d'injection (9) est disposé au moins partiellement à l'intérieur d'une zone aubagée d'une rangée d'aubes (6, 7) avec aubes fixes et/ ou réglables et passe à travers au moins un composant d'aube d'une aube fixe, et/ ou est disposé au moins partiellement à l'intérieur du cercle de révolution d'un des bords d'attaque et de fuite d'une aube réglable, que l'insert d'injection (9) est disposé en amont d'un interstice radial d'une rangée d'aubes (6, 7) munie d'extrémités d'aubes libres, qu'entre l'insert d'injection et la rangée d'aubes en question est prévu un mouvement relatif circonférentiel et que la direction du jet d'injection présente une composante vectorielle dans le sens d'avancement vu depuis l'injecteur, de manière telle que la direction du jet d'injection inscrit un angle positif alpha avec le sens d'écoulement méridien, sachant que pour l'angle alpha sont prévues des valeurs dans la plage définie comme suit : arctan [tan (90° - lambda) +1] < angle alpha < arctan [tan (90° - lambda) +4], où lambda est l'angle de décalage des aubes à l'extrémité d'aube concernée.

2. Machine à écoulement selon la revendication n° 1, **caractérisée en ce que** l'insert d'injection (9) est relié sans fuites à la paroi de la chambre d'alimentation en fluide (8).

3. Machine à écoulement selon la revendication n° 1 ou n° 2, **caractérisée en ce que** l'insert d'injection (9) est relié à la paroi de la chambre d'alimentation en fluide (8) par vissage.

4. Machine à écoulement selon la revendication n° 1 ou n° 2, **caractérisée en ce que** l'insert d'injection (9) est relié à la paroi de la chambre d'alimentation en fluide (8) par soudage.

5. Machine à écoulement selon la revendication n° 1 ou n° 2, **caractérisée en ce que** l'insert d'injection (9) est relié à la paroi de la chambre d'alimentation en fluide (8) au moyen d'un ajustage serré.

6. Machine à écoulement selon la revendication n° 1 ou n° 2, **caractérisée en ce que** l'insert d'injection (9) est relié à la paroi de la chambre d'alimentation en fluide (8) par assemblage.

7. Machine à écoulement selon une des revendications n° 1 à n° 6, **caractérisée en ce que** l'insert d'injection (9) délimite au moins partiellement l'interstice radial.

8. Machine à écoulement selon une des revendications n° 1 à n° 7, **caractérisée en ce que** dans la zone d'un bord de fuite d'aube, l'insert d'injection (9) est placé en prise au moins partiellement avec au moins une plateforme d'aube (11) et/ ou au moins un pied d'aube (11).

9. Machine à écoulement selon une des revendications n° 1 à n° 8, **caractérisée en ce que** dans la zone d'un bord d'attaque d'aube, l'insert d'injection (9) est placé en prise au moins partiellement avec au moins une plateforme d'aube (11) et/ ou au moins un pied d'aube (11).

10. Machine à écoulement selon une des revendications n° 1 à n° 9, **caractérisée en ce que** l'insert d'injection (9) est disposé à l'intérieur d'un passage d'aube entre deux aubes voisines.
